# EUROPEAN PATENT SPECIFICATION

(11) **EP 2 883 419 B1**
(45) Date of publication and mention of the grant of the patent: **08.03.2017**
(21) Application number: 13828586.1
(22) Date of filing: 07.08.2013
(51) Int. Cl.: H05B 7/148, H05B 7/109

(54) **ELECTRODE CONSUMPTION MONITORING SYSTEM**
SYSTEM ZUR ÜBERWACHUNG DES ELEKTRODENVERBRAUCHS
SYSTÈME DE SURVEILLANCE DE CONSOMMATION D'ÉLECTRODE

(30) Priority: 09.08.2012 US 201261681211 P
(43) Date of publication of application: 17.06.2015
(73) Proprietor: Graftech International Holdings Inc., Parma, OH 44130 (US)
(72) Inventor: LUGO-FLORES, Nicolas, Medina, Ohio 44256 (US); WELLS, Terrence Patrick, Strongsville, OH 44149 (US); GERHAN, Ronald Eric, Avon Lake, Ohio 44012 (US); RODRIGUEZ, Juan Gerardo Escamilla, Guadalupe Nuevo Leon 67150 (MX)
(74) Representative: Brand, Thomas Louis
(86) International application number: PCT/US2013/053940
(87) International publication number: WO 2014/025880

(56) References cited:
- EP-A1- 1 901 018
- WO-A1-00/74442
- WO-A2-02/063927
- CA-A1- 2 799 466
- US-A- 2 258 468
- US-A- 5 099 438
- US-A- 5 099 438
- US-A- 5 539 768
- US-B2- 6 603 795
- US-B2- 7 267 531
- US-B2- 7 991 039
- RADU BALAN ET AL: "Modeling and control of an electric arc furnace", CONTROL&AUTOMATION, 2007. MED '07. MEDITERRANEAN CONFERENCE O N, IEEE, PI, 1 June 2007 (2007-06-01), pages 1-6, XP031204470, ISBN: 978-1-4244-1281-5

## Description

### BACKGROUND

An electric arc furnace heats a charge of steel scrap material by means of an electric arc. The charged material is melted by direct exposure to the electric arc and subsequent passing of the electric current therethrough. An electric arc furnace generally includes a large vessel, covered with a retractable roof. The roof includes holes that allow one (in a DC furnace) or more commonly three (in an AC furnace) graphite electrode columns to enter the furnace. A movable electrode support structure holds and moves the electrode columns to maintain proximity to the scrap material. Power for the electrode columns is provided by a transformer, typically located near the furnace. The electrode columns each include a plurality of individual electrodes that are secured together with threaded connections at each end. The electrodes are slowly consumed as part of the steel making process and thus, new electrodes must be added to each column periodically.

During the melting cycle, a power regulating system attempts to maintain approximately constant current, power, impedance, admittance, resistance or some combination of these inputs during the melting of the charge. The regulator therefore seeks to control the distance between the electrode tip and the burden (solid charge material or molten metal) given the adopted regulation philosophy. This is made more difficult when scrap moves under the electrodes as it melts. Input is regulated, in part, by employing an electrode positioning system which automatically raises and lowers the electrode columns. Thus, during portions of a heat the electrode columns tend to continuously oscillate based on the constant corrections performed by the positioning system. In some cases, positioning systems may employ hydraulic cylinders to provide the moving force. In other furnaces an electric winch system may be employed.

Once relatively steady state conditions are reached in the furnace, (i.e. the scrap is substantially melted) another bucket of scrap may be charged into the furnace and melted down. After the first or optional second charge is completely melted, various other operations take place such as, refining, monitoring chemical compositions, and finally superheating the melt in preparation for tapping.

Knowledge of the rate of consumption of electrodes is very valuable to an electric arc furnace operator. This data may help an operator analyze optimal furnace conditions or determine and compare electrode performance. In order to determine consumption, however, a system must accurately and automatically determine when an electrode is added to a column.
US5099438 discloses a method for monitoring and/or controlling an electric arc furnace. Furnace data is collected during time intervals by one or more programmable logic controllers PLC(s), arranged in data subsets, and transmitted to one or more microcomputers during assigned time subintervals. Control factors are calculated by the microcomputer(s) for use in operating the arc furnace.

### SUMMARY OF THE INVENTION

According to one aspect, a method is provided for determining when an electrode add event occurs in an electric arc furnace having a plurality of electrode columns. Each electrode column is carried by an electrode positioning system including an electric winch motor operative to move the plurality of electrode columns upward and downward. The method includes receiving data correlating to the operating mode of the plurality of electrode columns. Data is also received correlating to power use of each electric winch motor in the electrode positioning systems. A defined mode is identified from the data correlating to the operating mode. An electrode add event is determined when, from power use data during the defined mode, a power spike is identified in the power use data of each electric winch motor.

According to another aspect, a system is provided for monitoring an electric arc furnace having a plurality of electrode columns, each electrode column being vertically movable by an electrode positioning system including an electric winch motor. The system includes a computing device adapted to receive data correlating to the operating mode of the plurality of electrode columns. The system receives data correlating to power use of each electric winch motor in the electrode positioning systems and identifies a defined mode from the data correlating to the operating mode. The system then determines an electrode add event when, from power use data during the defined mode, a power spike is identified in the power use data of each electric winch motor.

### BRIEF DESCRIPTION OF THE DRAWINGS

Figure 1 is a flow chart showing exemplary steps for determining an electrode add event.
Figure 2 is an exemplary chart showing defined mode electric winch motor current readings for an EAF furnace.
Figure 3 is an exemplary furnace monitoring system adapted to determine electrode add events and/or electrode consumption.

### DETAILED DESCRIPTION OF THE EMBODIMENTS

Graphite electrodes are a necessary consumable in an electric arc furnace and are the only known material suitable to withstand the extremely harsh operating environment of the electric furnace steelmaking operation. Accordingly, steel manufacturers are highly cognizant of the cost and performance of the graphite electrodes being consumed in the furnace. Commonly, the rate of electrode consumption is expressed in terms of pounds of electrodes consumed per ton of steel produced (hereinafter "lb/ton"). Generally, steel electric arc furnace operators seek to minimize the lb/ton consumption of graphite electrodes to thereby minimize electrode costs and increase profits.

According to one embodiment, electrode consumption may be determined from the following data inputs: 1) tons of steel produced per heat (hereinafter "tons/heat"); 2) number of heats per electrode addition (hereinafter "heats/add"); and 3) pounds of graphite per electrode. Advantageously, each data source is automatically determined (i.e. without regular input from a human operator). Accordingly, the number of tons/heat may be readily determined and acquired from the furnace control system, which closely monitors the tons/heat. Likewise, the pounds per electrode may advantageously be a constant input representing an average electrode weight for a given size. In this or other embodiments, a database or other electronically stored data matrix may be employed storing the average weights for various electrode sizes, or the exact weights of individual electrodes.

Electrode consumption is typically calculated over a period of time. For example, in one embodiment the electrode consumption is calculated as the consumption over a one week period. In other embodiments the consumption may be calculated over a two week period. In still other embodiments the electrode consumption is calculated over a one month period. In still further embodiments, the consumption is calculated for periods longer than about 3 days.

Determining the number of heats/add requires first knowing when an electrode is added to each electrode column and/or how many are added over the subject period of time. As discussed above, the determination that an electrode is added to one or more of the electrode columns is advantageously performed automatically.

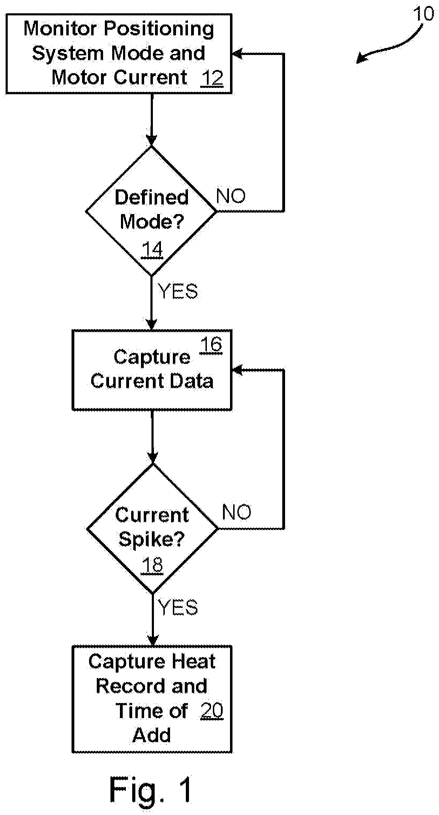

With reference now to Fig. 1, a method for automatically determining when an electrode is added to an electrode column is shown and indicated by the numeral 10. In a first step, two operating parameters of the electric arc furnace are monitored. In one embodiment, the first monitored operating parameter is the operating mode of the electrode positioning system. The operating mode may be captured from, for example the electronic arc furnace operating system (such as the regulator signal). According to another embodiment, the operating mode may be captured directly from the movement of the electrode mast by a column position transducer. The mast position transducer could be, for example, a wire strung system attached to the moving mast carrying the electrode column and to a stationary location to detect displacement of the electrode column via resolver or encoder device, or from an encoder or resolver attached directly to the electrode mast to detect its motion. According to still another embodiment, the operating mode may be determined by using an optical range finder to detect the motion of the electrode columns. Thus, according to the above, a control signal may directly indicate the operating mode or a measurement of the electrode column movement may correlate to a particular operating mode and thus be determined indirectly.

The second monitored operating parameter is data correlating to the weight of the electrode columns. As discussed above, during a heat, each electrode column is individually moved up and down by an electrode positioning system. This upward and downward movement facilitates the regulation of the arc length as the charged scrap melts and shifts in the furnace. In one embodiment, the actuating force that moves the electrode columns is provided by a winch system, wherein an electric winch motor is operatively connected to the mast that carries the electrode column via a high strength cable. An electric winch motor is provided for each electrode column carrying mast and the rotation of the electric winch motor causes the electrode columns to move upward or downward. Accordingly, the second monitored operating parameter is the power use of each electric winch motor. In a particularly advantageous embodiment, the electrical current of each electric winch motor is monitored, for example, by metering transformers.

Electrodes may be added to electrode columns between heats. Adding an electrode to an electrode column increases the weight of the electrode column. The increased weight forces the winch motor to work harder over the same movement profile. In other words, the electrical current used by the electric winch motor increases with the added weight of an additional electrode. Thereafter, as the electrode is slowly consumed in the furnace, the weight gradually decreases, resulting in lower electric winch motor power use. This gradual lowering and then spike in weight correlates directly to a gradual lowering and then spike in power draw of the electric winch motor.

It is, however, important to capture motor current values at similar times or periods of the heat. During an active heat, the electrode column is continuously moved up and down in reaction to furnace conditions. Given the variability of this phase of production, it is difficult to draw consistent and comparable weight conclusions from the power usage of the electrical winch motor. Consequently, the electric winch motor current is advantageously captured during a time when the electrodes are raised or lowered at a repeatable and defined speed at the same relative phase of the heating cycle.

For purposes of the present disclosure, a defined mode during a heating cycle is the period when the electrode columns are raised or lowered at a predefined speed and/or distance (vs. undefined mode during a heat when the electrode is irregularly raised and lowered). In one embodiment, advantageously the electric winch motor current value(s) are captured in the defined mode, wherein the defined mode is the period immediately after completion of a heat when the electrodes are raised automatically to facilitate emptying of the furnace or the addition of scrap to begin a new cycle. In another embodiment, advantageously the electric winch motor current value(s) are captured in the defined mode, wherein the defined mode is the period immediately prior to the first melting of steel. As discussed above, the defined mode may be determined directly by capturing control signals from the electronic arc furnace control or electrode positioning system. In other embodiments the defined mode may be determined by direct measurements of the movement of the electrode masts.

At a second step 14, it is determined whether the electrode positioning system is in the defined mode. If the furnace is not in defined mode, the system continues to monitor the electrode positioning system. However, if a defined mode is recognized, then electric winch motor power data is captured at step 16. The electric winch motor power data captured during the defined mode is preferred because the electrodes are being raised or lowered at a set speed and distance, thus allowing the data to be correlated to a relative weight over time of each electrode column.

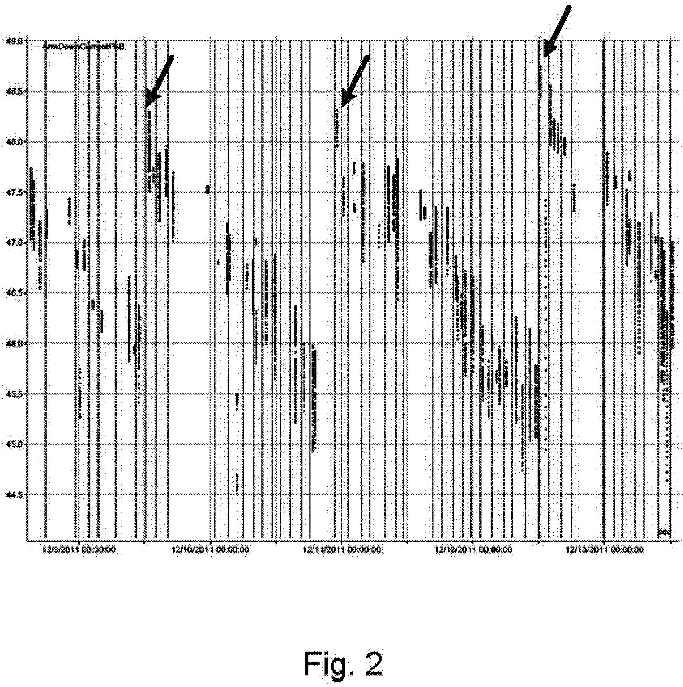

With reference now to Fig. 2, a chart shows exemplary power (specifically current) data captured during defined mode operation for one electrode column. As can be seen, the electric winch motor current for the electrode column steadily drops over time as the electrode column is consumed in the furnace (thus reducing weight). However, a spike can be seen (shown with arrows in the Figure) in the current data corresponding to the addition of an electrode to the electrode column. In this manner, at step 18, it is determined when an electrode add has occurred. In one embodiment, the electrode-add is determined when at least a 3% current or power increase is measured. In another embodiment, an electrode-add is determined when at least a 5% current or power increase is measured. In still a further embodiment, the electrode-add is determined when at least a 7% current or power increase is measured. In still other embodiments, an electrode-add is determined when a minimum predetermined absolute current or power change is measured. For example, in one embodiment if an increase of greater than about 2 amps is measured, it is determined than an electrode add has occurred. In another embodiment, if an increase of greater than about 3 amps is measured, it is determined that an electrode add has occurred.

At step 20 the electrode add event is captured, as well as the time of the electrode add. The add data may be correlated with other data from the furnace, such as the number and timing of each heat. In this manner, it can be determined how many heats are performed per electrode add over a given time period.

Once the heats-per-add is known, an electrode consumption calculation may be performed according to the following equation:

Electrode consumption (lb)/(ton) = (nominal electrode weight of one electrode) / ((heats per electrode addition) * (average heat steel weight))

As discussed above, nominal electrode weight may be drawn from a database file that stores nominal weights for all nominal sizes. Likewise, the average heat steel weight for a given time period may be collected by the furnace controller. The calculated electrode consumption may be provided to furnace operators in any manner. For example, in one embodiment, the electrode consumption is calculated on servers at a remote location (using data from the furnace communicated via the internet). The furnace operator may then access the electrode consumption data (in chart or graph form for example) via a website.

Display charts may include comparisons of consumption levels between different electrode columns within a furnace or comparisons of different electrode manufacturers/materials to optimize performance. In addition, by automatically determining the underlying frequency of electrode adds, a remote electrode supplier may adjust inventory or production based on the near real-time view of a furnace operator's electrode usage.

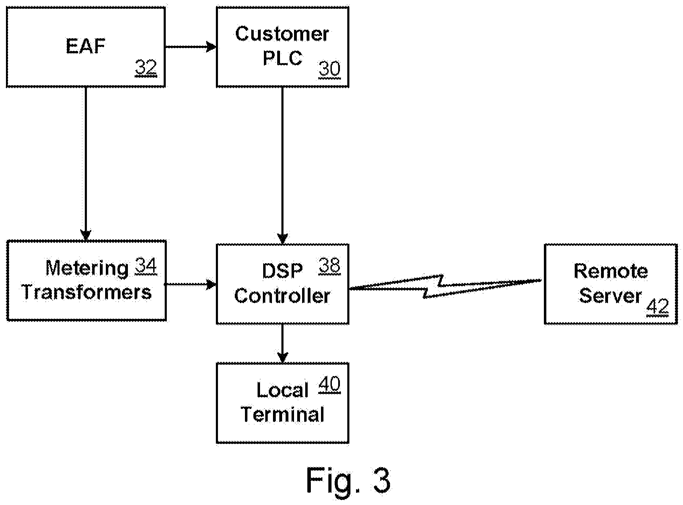

With reference now to Fig. 3, an exemplary electrode consumption monitoring system is shown. A furnace PLC 30 sends and receives signals from various control mechanisms associated with the electric arc furnace 32. For example, furnace PLC 30 may receive and or calculate signals representing the production (tons) per heat, end of heat signals, and modes of operation including the defined mode, from the electrode positioning system. Likewise metering transformers 34 may be in circuit with the electric winch motors. A digital signal processor 38 receives signals from both the metering transformers 34 and the furnace PLC 30. The data may be output to a local terminal/server 40 or to a remote server 42. According to one embodiment the local and/or remote server includes a database. The database may query the data from the digital signal processor 38 to determine an electrode add and/or other captured data. In other words, according to one embodiment, the digital signal processor 38 collects data from the furnace PLC 30 and metering transformers 34 and then transmits the data via a query to the database residing on the server 40 and/or 42. According to this embodiment, queries/routines may then be employed to determine when an electrode addition occurs. Thereafter, consumption, add and other performance data may be displayed in the form of on-line accessible web reports that furnace operators may access via a password protected web page.

In the above description, numerous specific details are set forth in order to provide a thorough description of the present invention. It will be apparent, however, to one skilled in the art, that the present invention may be practiced without these specific details. In other instances, well-known features have not been described in detail so as not to obscure the invention.

As can be appreciated by one of ordinary skill in the art, the present invention may take the form of a computer program product on a tangible computer-usable or computer-readable medium having computer-usable program code embodied in the medium. The tangible computer-usable or computer-readable medium may be any tangible medium such as by way of example, but without limitation, a flash drive, a hard disk, a random access memory (RAM), a read-only memory (ROM), an erasable programmable read-only memory (EPROM or Flash memory), an optical storage device, or a magnetic storage device.

Computer program code for carrying out one or more of the operations of the present invention may be written in an object oriented programming language such as Java, C++ or the like, or may also be written in conventional procedural programming languages, such as the "C" programming language. The program code may execute entirely on the on a local server/computer, partly on the local server/computer, as a stand-alone software package, partly on the local server/computer and partly on a remote computer/server or entirely on the remote computer/server. In the latter scenario, the remote computer/server may be connected to the local data sources and/or local computer/server through a local area network (LAN), a wide area network (WAN), or through the internet.

The various embodiments described herein can be practiced in any combination thereof. The above description is intended to enable the person skilled in the art to practice the invention. It is not intended to detail all of the possible variations and modifications that will become apparent to the skilled worker upon reading the description. It is intended, however, that all such modifications and variations be included within the scope of the invention that is defined by the following claims. The claims are intended to cover the indicated elements and steps in any arrangement or sequence that is effective to meet the objectives intended for the invention, unless the context specifically indicates the contrary.

## Claims

1. A method (10) for determining when an electrode add event occurs in an electric arc furnace (32) having a plurality of electrode columns, each carried by an electrode positioning system including an electric winch motor operative to move the plurality of electrode columns upward and downward, the method comprising:
receiving data correlating to the operating mode of the plurality of electrode columns;
receiving data correlating to power use of each electric winch motor in the electrode positioning systems;
identifying a defined mode from said data correlating to the operating mode; and
determining an electrode add event when, from power use data during the defined mode, a power spike is identified in said power use data of each electric winch motor.

2. The method according to claim 1 wherein said power spike is identified when motor current to said electric winch motor increases at least 5% occurs.

3. The method according to claim 1 or claim 2 wherein said defined mode comprises a period of time during a heating cycle when the electrode columns are raised or lowered at a predefined speed and/or distance.

4. The method according to claim 3 wherein a defined mode is the period immediately after completion of a heat when one or more electrode columns are raised automatically to facilitate emptying of the furnace or the addition of scrap to begin a new heating cycle.

5. The method according to claim 3 wherein the defined mode is the period immediately prior to the first melting of steel when one or more electrode columns are lowered automatically to begin the heating cycle.

6. The method according to any one of claims 1 to 5 wherein said data correlating to the operating mode of the plurality of electrode columns comprises:
control signals from an electronic arc furnace control system or an electrode positioning system; or
signals from one or more measurement devices capturing the movement of the electrode columns.

7. The method according to any one of claims 1 to 6 further comprising displaying the power use data correlating to the defined mode in graphical form via a website.

8. A system for monitoring an electric arc furnace (32) having a plurality of electrode columns, each electrode column being vertically movable by an electrode positioning system including an electric winch motor, the system comprising: a computing device adapted receive data correlating to the operating mode of the plurality of electrode columns, receive data correlating to power use of each electric winch motor in the electrode positioning systems, identify a defined mode from said data correlating to the operating mode; and determine an electrode add event when, from power use data during the defined mode, a power spike is identified in said power use data of each electric winch motor.

9. The system according to claim 8 wherein said power spike is identified when motor current to said electric winch motor increases at least 5% occurs.

10. The system according to claim 8 or claim 9 wherein said defined mode comprises a period of time during a heating cycle when the electrode columns are raised or lowered at a predefined speed and/or distance.

11. The system according to claim 8 or claim 9 wherein a defined mode is the period immediately after completion of a heat when one or more electrode columns are raised automatically to facilitate emptying of the furnace or the addition of scrap to begin a new heating cycle.

12. The system according to claim 8 or claim 9 wherein the defined mode is the period immediately prior to the first melting of steel when one or more electrode columns are lowered automatically to begin the heating cycle.

13. The system according to any one of claims 8 to 12 wherein said data correlating to the operating mode of the plurality of electrode columns comprises:
control signals from an electronic arc furnace control system or an electrode positioning system; or
signals from one or more measurement devices capturing the movement of the electrode columns.

14. The system according to any one of claims 8 to 13 wherein said computing device is further adapted to display the power use data correlating to the defined mode in graphical form via a website.

15. The system according to any one of claims 8 to 14 wherein said computing device is further adapted to display electrode add events in graphical form.

## Patentansprüche

1. Verfahren (10) zum Bestimmen, wann ein Elektroden-Hinzufügungsereignis in einem elektrischen Lichtbogenofen (32) mit einer Vielzahl von Elektrodensäulen auftritt, die jeweils von einem Elektroden-Positioniersystem mit einem elektrischen Windenmotor getragen werden, das dazu dient, die Vielzahl von Elektrodensäulen aufwärts oder abwärts zu bewegen, wobei das Verfahren umfasst:
Empfangen von Daten in Bezug auf den Betriebsmodus der Vielzahl von Elektrodensäulen;
Empfangen von Daten in Bezug auf den Leistungsverbrauch eines jeden elektrischen Windenmotors in den Elektroden-Positioniersystemen;
Identifizieren eines definierten Modus aus den Daten in Bezug auf den Betriebsmodus; und
Bestimmen eines Elektroden-Hinzufügungsereignisses, wenn aus den Leistungsverbrauchsdaten während des definierten Modus eine Leistungsspitze in den Leistungsverbrauchsdaten eines jeden elektrischen Windenmotors identifiziert wird.

2. Verfahren nach Anspruch 1, wobei die Leistungsspitze identifiziert wird, wenn eine Erhöhung des Motorstroms zu dem elektrischen Windenmotor um zumindest 5% auftritt.

3. Verfahren nach Anspruch 1 oder Anspruch 2, wobei der definierte Modus eine Zeitperiode während eines Aufheizzyklus umfasst, wenn die Elektrodensäulen mit einer vorbestimmten Geschwindigkeit und/oder einem vorbestimmten Abstand angehoben oder abgesenkt werden.

4. Verfahren nach Anspruch 3, wobei ein definierter Modus die Periode unmittelbar nach Abschluss einer Aufheizung ist, wenn eine oder mehrere Elektrodensäulen automatisch angehoben werden, um das Entleeren des Ofens oder die Zugabe von Schrott zu erleichtern, um einen neuen Aufheizzyklus zu beginnen.

5. Verfahren nach Anspruch 3, wobei der definierte Modus die Periode unmittelbar vor dem ersten Schmelzen von Stahl ist, wenn eine oder mehrere Elektrodensäulen automatisch abgesenkt werden, um den Aufheizzyklus zu beginnen.

6. Verfahren nach einem der Ansprüche 1 bis 5, wobei die Daten in Bezug auf den Betriebsmodus der Vielzahl von Elektrodensäulen umfassen:
Steuersignale von einem Steuersystem eines Lichtbogenofens oder eines Elektroden-Positioniersystems; oder
Signale von einer oder mehreren Messeinrichtungen, die die Bewegung der Elektrodensäulen erfassen.

7. Verfahren nach einem der Ansprüche 1 bis 6, des Weiteren umfassend das Anzeigen der Leistungsverbrauchsdaten in Bezug auf den definierten Modus in grafischer Form über eine Website.

8. System zum Überwachen eines elektrischen Lichtbogenofens (32) mit einer Vielzahl von Elektrodensäulen, wobei jede Elektrodensäule vertikal durch ein Elektroden-Positioniersystem beweglich ist, das einen elektrischen Windenmotor umfasst, wobei das System umfasst:
eine Computereinrichtung, die dazu geeignet ist, Daten in Bezug auf den Betriebsmodus der Vielzahl von Elektrodensäulen zu empfangen, Daten in Bezug auf den Leistungsverbrauch eines jeden elektrischen Windenmotors in den Elektrodenpositioniersystemen zu empfangen, einen definierten Modus aus den Daten in Bezug auf den Betriebsmodus zu identifizieren; und
ein Elektroden-Hinzufügungsereignis zu bestimmen, wenn aus den Leistungsverbrauchsdaten während des definierten Modus eine Leistungsspitze in den Leistungsverbrauchsdaten eines jeden elektrischen Windenmotors identifiziert wird.

9. System nach Anspruch 8, wobei die Leistungsspitze identifiziert wird, wenn eine Erhöhung des Motorstroms zu dem elektrischen Windenmotor um zumindest 5% auftritt.

10. System nach Anspruch 8 oder Anspruch 9, wobei der definierte Modus eine Zeitperiode während eines Aufheizzyklus umfasst, wenn die Elektrodensäulen mit einer vorbestimmten Geschwindigkeit und/oder einem vorbestimmten Abstand angehoben oder abgesenkt werden.

11. System nach Anspruch 8 oder Anspruch 9, wobei ein definierter Modus die Periode unmittelbar nach Abschluss einer Aufheizung ist, wenn eine oder mehrere Elektrodensäulen automatisch angehoben werden, um das Entleeren des Ofens oder die Zugabe von Schrott zu erleichtern, um einen neuen Aufheizzyklus zu beginnen.

12. System nach Anspruch 8 oder Anspruch 9, wobei der definierte Modus die Periode unmittelbar vor dem ersten Schmelzen von Stahl ist, wenn eine oder mehrere Elektrodensäulen automatisch abgesenkt werden, um den Aufheizzyklus zu beginnen.

13. Verfahren nach einem der Ansprüche 8 bis 12, wobei die Daten in Bezug auf den Betriebsmodus der Vielzahl von Elektrodensäulen umfassen:
Steuersignale von einem Steuersystem eines Lichtbogenofens oder eines Elektroden-Positioniersystems; oder
Signale von einer oder mehreren Messeinrichtungen, die die Bewegung der Elektrodensäulen erfassen.

14. System nach einem der Ansprüche 8 bis 13, wobei die Computereinrichtung des Weiteren dazu geeignet ist, die Leistungsverbrauchsdaten in Bezug auf den definierten Modus in grafischer Form über eine Website anzuzeigen.

15. System nach einem der Ansprüche 8 bis 14, wobei die Computereinrichtung des Weiteren dazu geeignet ist, die Elektroden-Hinzufügungsereignisse in grafischer Form über eine Website anzuzeigen.

## Revendications

1. Procédé (10) pour déterminer lorsqu'un événement d'ajout d'électrodes se produit dans un four à arc électrique (32) ayant une pluralité de colonnes d'électrodes, chacune étant portée par un système de positionnement d'électrodes comportant un moteur de treuil électrique fonctionnant pour déplacer la pluralité de colonnes d'électrodes vers le haut et vers le bas, le procédé comprenant le fait :
de recevoir des données en corrélation avec le mode de fonctionnement de la pluralité de colonnes d'électrodes ;
de recevoir des données en corrélation avec l'utilisation de puissance de chaque moteur de treuil électrique dans les systèmes de positionnement d'électrodes ;
d'identifier un mode défini à partir desdites données en corrélation avec le mode de fonctionnement ; et
de déterminer un événement d'ajout d'électrodes, à partir de données d'utilisation de puissance au cours du mode défini, lorsqu'un pic de puissance est identifié dans lesdites données d'utilisation de puissance de chaque moteur de treuil électrique.

2. Procédé selon la revendication 1, dans lequel ledit pic de puissance est identifié lorsqu'une augmentation d'au moins 5% du courant de moteur fourni audit moteur de treuil électrique se produit.

3. Procédé selon la revendication 1 ou 2, dans lequel ledit mode défini comprend une période de temps au cours d'un cycle de chauffage lorsque les colonnes d'électrodes sont soulevées ou abaissées à une vitesse et/ou une distance prédéfinie(s).

4. Procédé selon la revendication 3, dans lequel un mode défini est la période immédiatement après l'achèvement d'un chauffage lorsqu'une ou plusieurs colonne(s) d'électrodes est/sont soulevée(s) automatiquement pour faciliter le vidage du four ou l'ajout de ferrailles pour commencer un nouveau cycle de chauffage.

5. Procédé selon la revendication 3, dans lequel le mode défini est la période immédiatement avant la première fusion d'acier lorsqu'une ou plusieurs colonne(s) d'électrodes est/sont abaissée(s) automatiquement pour commencer le cycle de chauffage.

6. Procédé selon l'une quelconque des revendications 1 à 5, dans lequel lesdites données en corrélation avec le mode de fonctionnement de la pluralité de colonnes d'électrodes comprennent :
des signaux de commande provenant d'un système de commande de four à arc électronique ou d'un système de positionnement d'électrodes ; ou
des signaux provenant d'un ou de plusieurs dispositif(s) de mesure capturant le mouvement des colonnes d'électrodes.

7. Procédé selon l'une quelconque des revendications 1 à 6, comprenant en outre l'affichage des données d'utilisation de puissance en corrélation avec le mode défini sous forme graphique via un site Web.

8. Système de surveillance d'un four à arc électrique (32) ayant une pluralité de colonnes d'électrodes, chaque colonne d'électrodes étant verticalement mobile par un système de positionnement d'électrodes comportant un moteur de treuil électrique, le système comprenant : un dispositif informatique adapté pour recevoir des données en corrélation avec le mode de fonctionnement de la pluralité de colonnes d'électrodes, pour recevoir des données en corrélation avec l'utilisation de puissance de chaque moteur de treuil électrique dans les systèmes de positionnement d'électrodes, pour identifier un mode défini à partir desdites données en corrélation avec le mode de fonctionnement ; et pour déterminer un événement d'ajout d'électrodes, à partir de données d'utilisation de puissance au cours du mode défini, lorsqu'un pic de puissance est identifié dans lesdites données d'utilisation de puissance de chaque moteur de treuil électrique.

9. Système selon la revendication 8, dans lequel ledit pic de puissance est identifié lorsqu'une augmentation d'au moins 5% du courant de moteur fourni audit moteur de treuil électrique se produit.

10. Système selon la revendication 8 ou 9, dans lequel ledit mode défini comprend une période de temps au cours d'un cycle de chauffage lorsque les colonnes d'électrodes sont soulevées ou abaissées à une vitesse et/ou une distance prédéfinie(s).

11. Système selon la revendication 8 ou 9, dans lequel un mode défini est la période immédiatement après l'achèvement d'un chauffage lorsqu'une ou plusieurs colonne(s) d'électrodes est/sont soulevée(s) automatiquement pour faciliter le vidage du four ou l'ajout de ferrailles pour commencer un nouveau cycle de chauffage.

12. Système selon la revendication 8 ou 9, dans lequel le mode défini est la période immédiatement avant la première fusion d'acier lorsqu'une ou plusieurs colonne(s) d'électrodes est/sont abaissée(s) automatiquement pour commencer le cycle de chauffage.

13. Système selon l'une quelconque des revendications 8 à 12, dans lequel lesdites données en corrélation avec le mode de fonctionnement de la pluralité de colonnes d'électrodes comprennent :
des signaux de commande provenant d'un système de commande de four à arc électronique ou d'un système de positionnement d'électrodes ; ou
des signaux provenant d'un ou de plusieurs dispositif(s) de mesure capturant le mouvement des colonnes d'électrodes.

14. Système selon l'une quelconque des revendications 8 à 13, dans lequel ledit dispositif informatique est en outre adapté pour afficher les données d'utilisation de puissance en corrélation avec le mode défini sous forme graphique via un site Web.

15. Système selon l'une quelconque des revendications 8 à 14, dans lequel ledit dispositif informatique est en outre adapté pour afficher des événements d'ajout d'électrodes sous forme graphique.
